# EUROPÄISCHE PATENTSCHRIFT

(11) **EP 1 602 148 B1**
(45) Veröffentlichungstag und Bekanntmachung des Hinweises auf die Patenterteilung: **23.01.2008**
(21) Anmeldenummer: 03795735.4
(22) Anmeldetag: 18.11.2003
(51) Int. Cl.: H01Q 1/38, H01Q 1/32, H01Q 13/10, G01S 7/03, G01S 13/93

(54) **SCHLITZANTENNEN-ARRAY IN LTCC-TECHNIK**
SLOT ANTENNA ARRAY USING LTCC TECHNOLOGY
RESEAU D'ANTENNES A FENTE EN TECHNIQUE LTCC

(30) Priorität: 03.03.2003 DE 10309075
(43) Veröffentlichungstag der Anmeldung: 07.12.2005
(73) Patentinhaber: ROBERT BOSCH GMBH, 70442 Stuttgart (DE)
(72) Erfinder: SCHMIDT, Ewald, 71634 Ludwigsburg (DE); VOIGTLAENDER, Klaus, 73117 Wangen (DE); GAIER, Stefan, 70599 Stuttgart (DE); SEIDEL, Juergen, 73655 Pluederhausen (DE)
(86) Internationale Anmeldenummer: PCT/DE2003/003817
(87) Internationale Veröffentlichungsnummer: WO 2004/079860

(56) Entgegenhaltungen:
- WO-A-02/103846
- US-A- 3 653 052
- US-B1- 6 492 949

## Beschreibung

Die Erfindung betrifft eine planare Antennenanordnung in einem Radarsensor zur Erfassung von Objekten im Umgebungsbereich eines Kraftfahrzeugs gemäß dem Oberbegriff des Anspruchs 1. Eine solche Antennenanordnung ist bekannt aus der US-B1-6492 949.

Aus der Druckschrift EP 0685 930 A1 ist es bekannt, einen Radarsensor mit einer Halterung an einem Fahrzeug zu befestigen, um beispielsweise die Entfernung und die relative Geschwindigkeit eines vorausfahrenden Fahrzeugs zu bestimmen. Der dort beschriebene Radarsensor enthält einen Oszillator, einen Mischer, einen Verstärker, eine Antennenanordnung zum Senden und Empfangen von Mikrowellenstrahlung und einen Empfänger mit einer Auswerteelektronik. Ein vorteilhaftes Gehäuse für einen derartigen Radarsensor ist beispielsweise in der Druckschrift DE 199 04 303 A1 offenbart.

### Darstellung der Erfindung

Der Erfindung liegt die Aufgabe zugrunde, eine Antennenanordnung der eingangs genannten Art anzugeben, die in LTCC-Technologie (Low Temperature Cofired Ceramics) dargestellt werden kann und die bei planaren Aufbau einen guten Antennenwirkungsgrad erreicht. Diese Aufgabe wird durch die im Anspruch 1 angegebenen Merkmale gelöst. Vorteilhafte Ausgestaltungen und Weiterbildungen der Erfindung sind in den Unteransprüchen gekennzeichnet.

Die Erfindung geht dabei von der Beobachtung aus, dass bei Aufbau der Antennenanordnung in LTCC-Dickschichttechnik Löcher oder Kavitäten nicht möglich sind. Auch wird eine Wellenablösung in Richtung des freien Raums durch die hohe Dielektrizitätskonstante erschwert. Statt dessen vagabundieren die Mikrowellenenergie in der Keramik.

Die Speiseleitungen und die Koppelschlitze sind in einem Mehrlagenkeramik-Substrat in LTCC-Dickschichttechnik mit einer oberen und einer unteren Masselage ausgebildet und die Speiseleitungen und die Koppelschlitze sind durch Durchkontaktierungen von der oberen zur unteren Masselage gekammert. Dadurch wird sichergestellt, dass die Mikrowellenenergie nicht in die übrige Schaltung eingestrahlt werden kann.

Nach Patentanspruch 2 kann mit Vorteil vorgesehen sein, dass die Speiseleitung und die Koppelschlitze in einem festgelegten Abstand von Durchkontaktierungen umgeben sind, wobei der Abstand kleiner ist als ein kritischer Abstandswert, bei welchem sich Hohlleitermoden ausbilden. Durch diese Abschirmung werden die Leitungen für die Strahlung gleichsam zugenagelt.

Bevorzugt liegt nach der Maßnahme des Patentanspruchs 3 der festgelegte Abstand im Bereich von etwa 0,01 *λ, bis etwa 0,1 * λ, wobei λ die Wellenlänge der abgestrahlten Mikrowellenstrahlung darstellt.

Nach der Maßnahme des Patentanspruchs 5 beträgt der Abstand der Koppelschlitze zum Ende des Resonators im wesentlichen (2n-1) * λ/4, wobei λ die Wellenlänge der abgestrahlten Mikrowellenstrahlung und n eine natürliche Zahl darstellt. Im einfachsten Fall beträgt der Abstand der Koppelschlitze zum Ende des Resonators etwa λ/4, entsprechend n=1.

Gemäß Patentanspruch 6 beträgt der Abstand der Koppelschlitze zur Rückwand im wesentlichen 2n * λ/4, wobei λ die Wellenlänge der abgestrahlten Mikrowellenstrahlung und n eine natürliche Zahl darstellt. Im einfachsten Fall beträgt der Abstand der Koppelschlitze zur Rückwand etwa λ/2, entsprechend n = 1.

Bei der vorteilhaften Ausgestaltung gemäß Patentanspruch 7 ist vorgesehen, dass die Durchkontaktierungen die Koppelschlitze entlang einer im wesentlichen rechteckigen Umfangslinie einschließen. Der Abstand der Koppelschlitze zur Kante der Durchkontaktierungen senkrecht zur Schlitzrichtung beträgt dabei bevorzugt im wesentlichen 2n * λ/4, wobei λ die Wellenlänge der abgestrahlten Mikrowellenstrahlung und n eine natürliche Zahl darstellt. Auch hier-beträgt der Abstand im einfachsten Fall etwa λ/2, entsprechend n = 1.

Eine besonders hohe Übertragung der Energie auf den kompletten Schlitz wird durch die Maßnahme des Patentanspruchs 8 erreicht, nach der die Durchkontaktierungen die Koppelschlitze entlang einer in der Schlitzmitte ausgebuchteten Umfangslinie einschließen. Dabei ist der Abstand in der Mitte der Schlitze etwas größer als 2n *λ/4 und außerhalb der Mitte etwas kleiner als 2n *λ/4*.* Auch hier stellt λ die Wellenlänge der abgestrahlten Mikrowellenstrahlung und n eine natürliche Zahl dar.

Um die seitliche vagabundierende Energie auf die Koppelschlitze zurückzureflektieren, ist gemäß Patentanspruch 9 vorgesehen, dass die Durchkontaktierungen die Koppelschlitze entlang einer Umfangslinie mit abgerundeten Ecken einschließen.

Zur Erhöhung der Sperrwirkung können gemäß Patentanspruch 10 zwei Durchkontaktierungsreihen im Abstand einer halben Wellenlänge vorgesehen sein.

Insgesamt bieten die erfindungsgemäßen Ausführungsformen einen vollkommenen planaren Aufbau der Antennenanordnung ohne ein Erfordernis für Löcher oder Kavitäten, eine einfach und kostengünstige Realisierung in LTCC-Technologie, eine komplette Abschirmung von anderen Schaltungsteilen und die Rückgewinnung von gestreuten Feldern. Dadurch erhöhen sich die abgestrahlte Leistung und somit auch der Wirkungsgrad der Antennen.

### Kurze Beschreibung der Zeichnungen

Ausführungsbeispiele der Erfindung werden nachstehend anhand der Zeichnungen näher erläutert. Es zeigen
- Fig. 1: eine Aufsicht auf eine planare Antennenanordnung (die Ausführung von Fig. 1 dient dem Verständnis und ist nicht Gegenstand der Erfindung);
- Fig. 2: in (a) bis (d) Varianten der Abschirmung der Koppelschlitze für ein Antennenarray mit vier Elementen (die Ausführung von Fig. 2a dient dem Verständnis und ist nicht Gegenstand der Erfindung);
- Fig. 3: in (a) bis (f) vorteilhafte Anordnungsvarianten für die Durchkontaktierungen mit besonders kompakten Abmessungen (die Ausführungen von Fig. 3a und Fig. 3b dienen dem Verständnis und sind nicht Gegenstand der Erfindung);
- Fig. 4: in (a) bis (f) vorteilhafte Anordnungsvarianten für die Durchkontaktierungen mit besonders hohem Gewinn (die Ausführungen von Fig. 4a und Fig. 4b dienen dem Verständnis und sind nicht Gegenstand der Erfindung);

### Bester Weg zur Ausführung der Erfindung

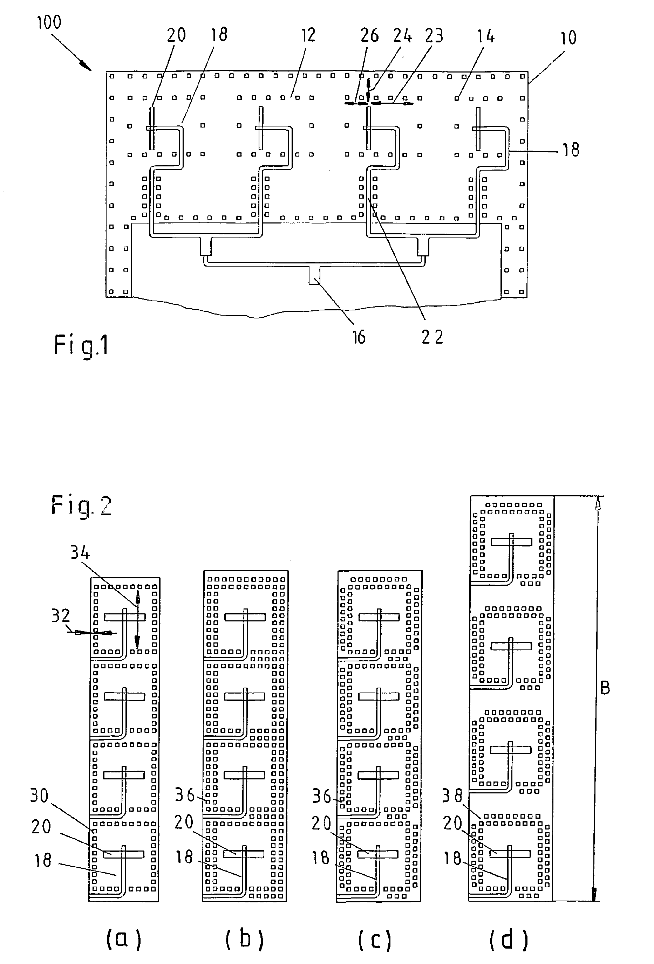

Figur 1 zeigt eine Aufsicht auf eine planare Antennenanordnung 100 nach einem Ausführungsbeispiel der Erfindung. Die Antennenanordnung 100 weist ein LTCC-Substrat 10 mit einer oberen Masselage 12 und einer in der Darstellung der Fig. 1 nicht sichtbaren unteren Masselage auf. Eine Mehrzahl rechteckförmiger Durchkontaktierungen 14 verbindet die obere mit der unteren Masselage.

Die Antennenanordnung 100 enthält weiter ein Mikrostrip-Speisenetzwerk 16, das im Ausführungsbeispiel vier vergrabene Speiseleitungen 18 versorgt, die jeweils zu einem von vier Koppelschlitzen 20 zur Auskopplung der Mikrowellenstrahlung in den freien Raum führen. Zwischen den Speiseleitungen 18 und dem Speisenetzwert 16 sind im LTCC-Substrat 10 vier koplanare Wellenleiter 22 angeordnet. Im Ausführungsbeispiel der Fig. 1 schließen die Durchkontaktierungen 14 die Kopplungsschlitze 20 in Schlitzrichtung mit einem Abstand 24 von etwa λ/2, und senkrecht zur Schlitzrichtung mit Abständen 26 und 28 von etwa 0,8 * λ/2 bzw. 1,3* λ/2 ein.

Figur 2 zeigt verschiedene Varianten der Abschirmung durch die Durchkontaktierungen für ein Antennenarray mit vier Elementen. In Figur 2(a) sind die Koppelschlitze 20 durch eine einreihige Anordnung aus Durchkontaktierungen 30 in Form eines Rechtecks eingeschlossen. Dabei beträgt der Abstand 32 zwischen den Koppelschlitzen 20 und den Durchkontaktierungen in Schlitzrichtung von etwa 0,1 * λ/2. Der Abstand 34 zwischen der oberen und unteren Durchkontaktierungsreihe beträgt etwa eine Wellenlänge.

Figur 2(b) zeigt eine alternative Ausführungsform, bei der die Koppelschlitze 20 bei gegenüber Fig. 2(a) unveränderten Abständen von zweireihigen Durchkontaktierungsanordnungen 36 eingeschlossen sind. Die beiden Durchkontaktierungsreihen sind dabei zueinander ausgerichtet, das heißt, eine Parallele in Schlitzrichtung trifft entweder auf beide oder auf keine der Durchkontaktierungsreihen. Eine ebenfalls mögliche gegeneinander versetzte Anordnung der Durchkontaktierungsreihen 38 ist in den Figuren 2(c) und 2(d) gezeigt. Während die Ausgestaltung der Fig. 2(c) auf kompakteste Abmessungen optimiert ist, ist sind die vier Arrayelemente in Fig. 2(d) über die gesamte Schaltungsbreite B verteilt.

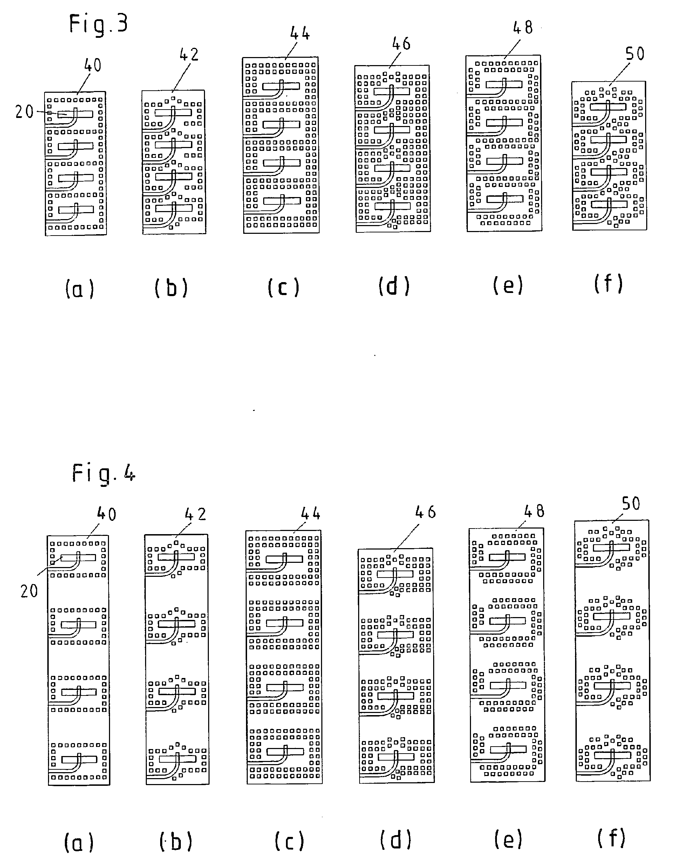

Weitere vorteilhafte Anordnungsvarianten für die Durchkontaktierungen sind in den Figuren 3 und 4 dargestellt. Bei den Strukturen der Fig. 3 wurde dabei jeweils auf kompakteste Abmessung Wert gelegt, während die Strukturen der Fig. 4 auf maximalen Gewinn optimiert sind.

Die Figuren 3(a) und 4(a), nicht Gegenstand der Erfindung, zeigen, ähnlich wie Fig. 2(a) jeweils eine Anordnung, bei der die Koppelschlitze 20 durch eine einreihige Anordnung aus Durchkontaktierungen 40 in Form eines Rechtecks eingeschlossen sind. Der Abstand der Koppelschlitze 20 zur Kante der Durchkontaktierungen 40 senkrecht zur Schlitzrichtung beträgt dabei etwa λ/2.

In der Variante der Fig. 3(b) bzw. 4(b), nicht Gegenstand der Erfindung, sind die Koppelschlitze 20 von den Durchkontaktierungen 42 entlang einer an der Schlitzmitte ausgebuchteten Umfangslinie eingeschlossen. Der Abstand der Koppelschlitze 20 zur Kante der Durchkontaktierungen 42 ist dabei in der Mitte der Schlitze etwas größer als λ/2 und außerhalb der Mitte etwas kleiner als λ/2. Dadurch ergibt sich eine sehr gute Bündelung der Energie auf den ganzen Koppelschlitz 20.

Die Strukturen der Figuren 3(c) bzw. 4(c) und 3(d) bzw. 4(d) sind analog zu den Strukturen der Fig. 3(a) bzw. 4(a) und 3(b) bzw. 4(b) gebildet, wobei die einreihige Anordnung jeweils durch eine doppelreihige Anordnung der Durchkontaktierungen 44 bzw. 46 ersetzt ist.

Die Varianten nach Fig. 3(e) und 4(e) beziehen die in den äußeren Ecken befindliche Energie mit ein. Durch die abgerundeten Ecken der Umfangslinie der Durchkontaktierungsanordnungen 48 wird die seitliche vagabundierende Energie auf den Koppelschlitz 20 zurückreflektiert und genutzt.

Die Durchkontaktierungsanordnungen 50 der Strukturen nach Fig. 3(f) und 4(f) kombinieren die Vorteile der in der Mitte ausgebuchteten Umfangslinie nach Fig. 3(d) bzw. 4(d) mit der abgerundeten Eckenführung der Fig. 3(e) bzw. 4(e) und führen zu einem besonders guten Wirkungsgrad der Antennen.

Während die Erfindung insbesondere mit Bezug auf ein bevorzugtes Ausführungsbeispiel gezeigt und beschrieben worden ist, versteht sich für den Fachmann, dass Änderungen in Gestalt und Einzelheiten gemacht werden können, ohne von dem Gedanken und Umfang der Erfindung abzuweichen. Dementsprechend soll die Offenbarung der vorliegenden Erfindung nicht einschränkend sein. Statt dessen soll die Offenbarung der vorliegenden Erfindung den Umfang der Erfindung veranschaulichen, der in den nachfolgenden Ansprüchen dargelegt ist.

## Patentansprüche

1. Planare Antennenanordnung in einem Radarsensor zur Erfassung von Objekten im Umgebungsbereich eines Kraftfahrzeugs, mit einer Mehrzahl von Mikrostreifen-Speiseleitungen (18) und einer Mehrzahl von Koppelschlitzen (20) zur Abstrahlung der Mikrowellenenergie in den freien Raum, wobei die Speiseleitungen (18) und die Koppelschlitze (20) in einem Mehrlagenkeramik-Substrat (10) in LTCC-Dickschichttechnik mit einer oberen (12) und einer unteren Masselage ausgebildet sind, und wobei die Speiseleitungen (18) und die Koppelschlitze (20) durch Durchkontaktierungen (14) von der oberen zur unteren Masselage gekammert sind, **dadurch gekennzeichnet, dass** jeder Koppelschlitz (20) von einer doppelreihigen Anordnung aus Durchkontaktierungen (36, 38) eingeschlossen ist, wobei die beiden Anordnungsreihen aufeinander ausgerichtet oder versetzt zueinander angeordnet sind.

2. Antennenanordnung nach Anspruch 1, **dadurch gekennzeichnet, dass** die Speiseleitungen (18) und die Koppelschlitze (20) in einem festgelegten Abstand von Durchkontaktierungen (14) umgeben sind, wobei der Abstand kleiner ist als ein kritischer Abstandswert, bei welchem sich Hohlleitermoden ausbilden.

3. Antennenanordnung nach Anspruch 2, **dadurch gekennzeichnet, dass** der festgelegte Abstand im Bereich von etwa 0,01 * λ bis etwa 0,1 * λ liegt, wobei λ die Wellenlänge der abgestrahlten Mikrowellenstrahlung darstellt.

4. Antennenanordnung nach einem der vorhergehenden Ansprüche, **dadurch gekennzeichnet, dass** der Abstand der Koppelschlitze (20) zum Ende des Resonators im wesentlichen (2n-1) * λ/4 beträgt, wobei λ die Wellenlänge der abgestrahlten Mikrowellenstrahlung und n eine natürliche Zahl darstellt.

5. Antennenanordnung nach einem der vorhergehenden Ansprüche, **dadurch gekennzeichnet, dass** der Abstand der Koppelschlitze (20) zur Rückwand im wesentlichen 2n * λ/4 beträgt, wobei λ die Wellenlänge der abgestrahlten Mikrowellenstrahlung und n eine natürliche Zahl darstellt.

6. Antennenanordnung nach einem der vorhergehenden Ansprüche, **dadurch gekennzeichnet, dass** die Durchkontaktierungen (36, 38) die Koppelschlitze (20) entlang eine im wesentlichen rechteckigen Umfangslinie einschließen, wobei der Abstand der Koppelschlitze (20) zur Kante der Durchkontaktierungen (36, 38) senkrecht zur Schlitzrichtung bevorzugt im wesentlichen 2n * λ/4 beträgt, wobei λ die Wellenlänge der abgestrahlten Mikrowellenstrahlung und n eine natürliche Zahl darstellt.

7. Antennenanordnung nach einem der vorhergehenden Ansprüche, **dadurch gekennzeichnet, dass** die Durchkontaktierungen (46) die Koppelschlitze (20) entlang einer an der Schlitzmitte ausgebuchteten Umfangslinie einschließen, wobei der Abstand in der Mitte der Schlitze größer als 2n *λ/4 und außerhalb der Mitte kleiner als 2n *λ/4 ist, wobei λ die Wellenlänge der abgestrahlten Mikrowellenstrahlung und n eine natürliche Zahl darstellt.

8. Antennenanordnung nach einem der vorhergehenden Ansprüche, **dadurch gekennzeichnet, dass** die Durchkontaktierungen (48, 50) die Koppelschlitze (20) entlang einer Umfangslinie mit abgerundeten Ecken einschießen.

9. Antennenanordnung nach einem der vorhergehenden Ansprüche, **dadurch gekennzeichnet, dass** zwei Durchkontaktierungsreihen im Abstand einer halben Wellenlänge vorgesehen sind.

## Claims

1. Planar antenna arrangement in a radar sensor for detection of objects in the area surrounding a motor vehicle, having a plurality of microstrip feed lines (18) and having a plurality of coupling slots (20) for radiated emission of the microwave energy in the free space, with the feed lines (18) and the coupling slots (20) being formed in a multilayer ceramic substrate (10) using LTCC thick-film technology with an upper (12) and a lower ground layer, and with the feed lines (18) and the coupling slots (20) being formed into chambers by plated-through holes (14) from the upper to the lower ground layer, **characterized in that** each coupling slot (20) is enclosed by a double-row arrangement of plated-through holes (36, 38), with the two arrangement rows being aligned with respect to one another or being arranged offset with respect to one another.

2. Antenna arrangement according to Claim 1, **characterized in that** the feed lines (18) and the coupling slots (20) are surrounded at a fixed distance by plated-through holes (14), with the distance being less than a critical distance value at which waveguide modes are formed.

3. Antenna arrangement according to Claim 2, **characterized in that** the fixed distance is in the range from about 0.01 * λ to about 0.1 * λ, where λ is the wavelength of the emitted microwave radiation.

4. Antenna arrangement according to one of the preceding claims, **characterized in that** the distance between the coupling slots (20) and the end of the resonator is essentially (2n-1) * λ/4, where λ is the wavelength of the emitted microwave radiation and n is a natural number.

5. Antenna arrangement according to one of the preceding claims, **characterized in that** the distance between the coupling slots (20) and the rear wall is essentially 2n*λ/4 where λ is the wavelength of the emitted microwave radiation and n is a natural number.

6. Antenna arrangement according to one of the preceding claims, **characterized in that** the plated-through holes (36, 38) enclose the coupling slots (20) along an essentially rectangular circumferential line, with the distance between the coupling slots (20) and the edge of the plated-through holes (36, 38) at right angles to the slot direction preferably being essentially 2n*λ/4, where λ is the wavelength of the emitted microwave radiation and n is a natural number.

7. Antenna arrangement according to one of the preceding claims, **characterized in that** the plated-through holes (46) enclose the coupling slots (20) along a circumferential line which bulges out at the slot centre, with the distance in the centre of the slots being greater than 2n*λ/4 and being less than 2n*λ/4 away from the centre, where λ is the wavelength of the emitted microwave radiation and n is a natural number.

8. Antenna arrangement according to one of the preceding claims, **characterized in that** the plated-through holes (48, 50) enclose the coupling slots (20) along a circumferential line with rounded corners.

9. Antenna arrangement according to one of the preceding claims, **characterized in that** two rows of plated-through holes are provided, separated by half a wavelength.

## Revendications

1. Dispositif d'antennes planes dans un capteur radar pour la saisie d'objets dans l'environnement d'un véhicule, comprenant plusieurs lignes d'alimentation en microbandes (18) et plusieurs fentes de couplage (20) pour rayonner de l'énergie hyperfréquence dans l'espace libre,
les lignes d'alimentation (18) et les fentes de couplage (20) étant réalisées dans un substrat en céramique multicouche (10) en technique de couches épaisses LTCC comprenant une couche de masse supérieure (12) et une couche de masse inférieure, et
les lignes d'alimentation (18) et les fentes de couplage (20) sont encapsulées par des contacts traversants (14) entre la couche de masse supérieure et la couche de masse inférieure,
**caractérisé en ce que**
chaque fente de couplage (20) est enfermée par une disposition à double rangée de contacts traversants (36, 38),
les deux rangées de la disposition étant alignées l'une par rapport à l'autre en étant décalées.

2. Dispositif d'antennes selon la revendication 1,
**caractérisé en ce que**
les lignes d'alimentation (18) et les fentes de couplage (20) sont entourées à un écartement fixe, par les contacts traversants (14), la distance étant inférieure à une distance critique pour laquelle se développent les modes de guides d'ondes.

3. Dispositif d'antennes selon la revendication 2,
**caractérisé en ce que**
la distance fixe est de l'ordre d'environ 0,01 * λ jusqu'à environ 0,1 * λ, λ étant la longueur d'onde du rayonnement hyperfréquence émis.

4. Dispositif d'antennes selon l'une des revendications précédentes,
**caractérisé en ce que**
la distance des fentes de couplage (20) à l'extrémité du résonateur est pratiquement égale à (2n-1) * λ/4, λ étant la longueur d'onde du rayonnement micro-ondes émis et (n) étant un nombre naturel.

5. Dispositif d'antennes selon l'une des revendications précédentes,
**caractérisé en ce que**
la distance des fentes de couplage (20) par rapport à la paroi arrière est essentiellement égale à 2n * λ/4, λ étant la longueur d'onde du rayonnement hyperfréquence émis et n étant un entier naturel.

6. Dispositif d'antennes selon l'une des revendications précédentes,
**caractérisé en ce que**
les contacts traversants (36, 38) entourent les fentes de couplage (20) le long d'une ligne périphérique essentiellement rectangulaire, la distance des fentes de couplage (20) par rapport à l'arête des contacts traversants (36, 38) perpendiculairement à la direction des fentes étant de préférence pratiquement égale à 2n * λ/4, λ étant la longueur d'onde du rayonnement hyperfréquence émis et (n) étant un entier naturel.

7. Dispositif d'antennes selon l'une des revendications précédentes,
**caractérisé en ce que**
les contacts traversants (46) entourent les fentes de couplage (20) le long d'une ligne périphérique avec une concavité au milieu de la fente et la distance au milieu de la fente est supérieure à 2n * λ/4 et en dehors du milieu la distance est inférieure à 2n * λ/4, λ étant la longueur d'onde du rayonnement hyperfréquence émis et n étant un entier naturel.

8. Dispositif d'antennes selon l'une des revendications précédentes,
**caractérisé en ce que**
les contacts traversants (48, 50) entourent les fentes de couplage (20) le long d'une ligne périphérique avec des coins arrondis.

9. Dispositif d'antennes selon l'une des revendications précédentes,
**caractérisé en ce que**
deux rangées de contacts traversants ont un écartement d'une demi-longueur d'onde.
